# DEMANDE DE BREVET EUROPEEN

(11) **EP 0 608 159 A1**
(43) Date de publication de la demande: **27.07.1994**
(21) Numéro de dépôt: 94400043.9
(22) Date de dépôt: 06.01.1994
(51) Int. Cl.: B60T 7/08

(54) **Frein de parc pour véhicule automobile à effort de manoeuvre réduit**

(30) Priorité: 19.01.1993 FR 9300483
(71) Demandeur: ROCKWELL BODY AND CHASSIS SYSTEMS - FRANCE, en abrégé: ROCKWELL BCS - FRANCE, F-92082 Paris La Défense 2 (FR)
(72) Inventeur: Belmond, Jean-Marc, Naymont Les Fausses, F-88105 Saint-Die (FR); Ottolini, Philippe, F-88100 Saint-Die (FR)
(74) Mandataire: Martin, Jean-Paul

(57) **Abrégé**

Frein de parc pour véhicule, du type comprenant un levier (1) articulé sur un axe (2) solidaire d'une semelle (3) adaptée pour être solidarisée avec le châssis du véhicule, relié à au moins un câble (7) de serrage, et des moyens de verrouillage du levier dans une position angulaire pré-déterminée ; le levier comporte un élément (9) de liaison avec le câble, et l'extrémité de la semelle (3) contiguë à l'axe d'articulation du levier est profilée de manière à former une rampe (11) de limitation du débattement dudit élément de liaison durant les manoeuvres du levier, cette rampe étant limitée par une butée (11 b) de retenue du levier en position relevée de serrage du frein et étant positionnée à l'extrémité de la semelle opposée à l'entrée du câble. Ce frein ne nécessite pour sa manoeuvre qu'un effort limité de la part de l'utilisateur, inférieur aux efforts habituellement nécessaires sur les freins classiques à secteurs dentés et cliquets.

## Description

La présente invention a pour objet un frein de parc pour véhicule, du type comprenant un levier articulé sur un axe solidaire d'une semelle adaptée pour être solidarisée avec le châssis du véhicule, relié à au moins un câble de serrage, et des moyens de verrouillage du levier dans une position angulaire pré-déterminée.

On sait que les freins de parc pour véhicule utilisés actuellement comportent généralement des systèmes à cliquet et secteurs dentés. Dans les cas d'utilisation extrême, l'ergonomie de la commande de ces freins de parc est relativement peu satisfaisante, car l'effort qui doit être développé au levier est au minimum de l'ordre de 35 à 40 daN pour obtenir la tension adéquate dans les câbles de serrage.

Le desserrage du frein nécessite de plus un effort de soulagement supplémentaire de la part de l'utilisateur, effort d'autant plus important que la tension dans les câbles est plus élevée.

L'invention a pour but de réaliser un frein de parc dont la commande nécessite des efforts globalement inférieurs à ceux exigés jusqu'à présent.

Conformément à l'invention, le levier comporte un élément de liaison avec l'extrémité du câble, et l'extrémité de la semelle contiguë à l'axe d'articulation du levier est profilée de manière à former une rampe de limitation du débattement dudit élément de liaison durant les manoeuvres du levier, cette rampe étant limitée par une butée de retenue du levier en position relevée de serrage du frein et étant positionnée à l'extrémité de la semelle opposée à l'entrée du câble, l'axe d'articulation étant situé entre cette entrée et l'élément de liaison précité.

Suivant un mode de réalisation avantageux de l'invention, dans lequel le frein comporte deux cables disposés de chaque côté de la semelle, les extrémités de ces câbles sont fixées à l'élément de liaison transversal précité et il est prévu des moyens de réglage de la tension des câbles, tel qu'un palonnier associé à un système vis-écrou monté sur la semelle.

Les câbles sont avantageusement positionnés de chaque côté de la commande par des rainures de guidage ménagées à l'arrière de la semelle. Une telle disposition des câbles permet de manoeuvrer le frein avec des efforts inférieurs à ceux nécessaires jusqu'à présent.

Suivant une caractéristique de l'invention, les moyens de verrouillage du levier en position serrée comprennent un axe fixé à l'extrémité d'un poussoir monté coulissante à l'intérieur du levier et soumis à une contrainte de rappel élastique, une came d'appui de cet axe ménagée dans la semelle et des lumières agencées dans le levier pour permettre le guidage et la translation de l'axe durant les manoeuvres du levier, les extrémités de la came définissant les positions de repos et serrée du levier et la contrainte de rappel élastique du poussoir tendant à maintenir ledit axe de verrouillage appliqué sur la came.

Avantageusement, la butée de retenue du levier en position de serrage est ménagée de telle sorte que dans cette position, le câble forme un angle avec le plan de fixation de la semelle sur le châssis, et que de ce fait la direction de l'effort dans le câble crée un couple résultant moteur sur le levier.

D'autres particularités et avantages de l'invention apparaîtront au cours de la description qui va suivre, faite en référence aux dessins annexés qui en illustrent une forme de réalisation à titre d'exemple non limitatif.
La figure 1 est une vue mi-coupe longitudinale mi-élévation partielle suivant 1-1 de la Fig.4 d'une forme de réalisation du frein de parc selon l'invention, en position desserrée avec le levier abaissé.
La figure 2 est une vue en élévation en bout suivant la flèche F de la Fig.1.
La figure 3 est une vue en coupe longitudinale avec élévation partielle de la semelle suivant 3-3 de la Fig.2.
La figure 4 est une vue en coupe longitudinale partielle suivant 4-4 de la Fig.1.
La figure 5 est une vue analogue à la Fig.1 montrant le frein en position serrée avec le levier relevé.
La figure 6 est une vue en coupe longitudinale partielle du levier suivant la direction 6 de la Fig.5.

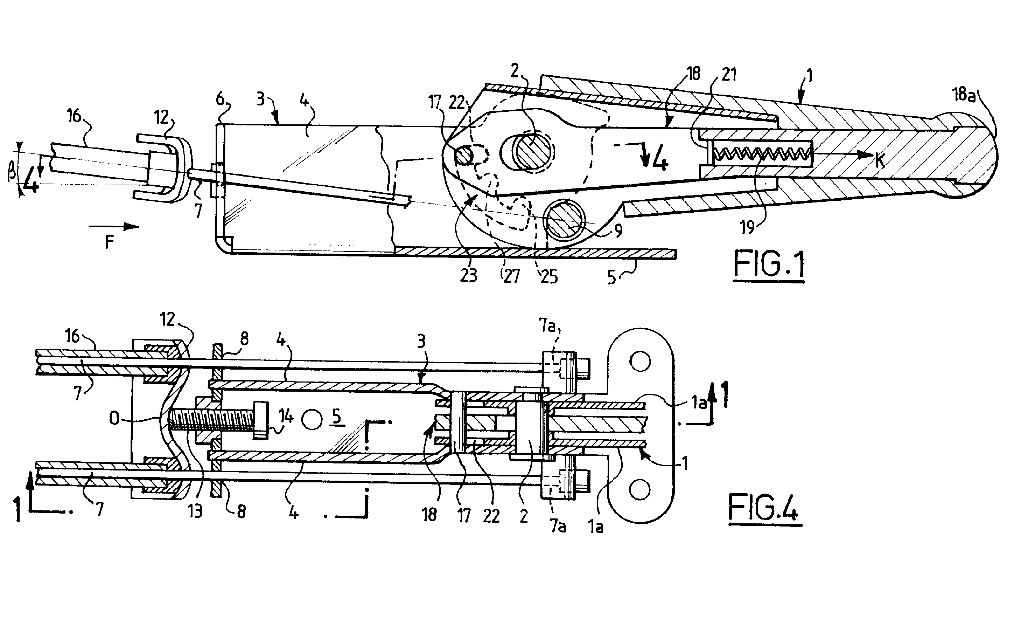

Le frein de parc pour véhicule automobile représenté aux Fig. 1 à 6 comprend un levier 1 évidé, articulé par l'une de ses extrémités sur un axe transversal 2 monté dans une semelle 3. Cette dernière est constituée par deux parois longitudinales parallèles4 reliées par un fond 5 et par une paroi transversale terminale 6, du côté de l'arrivée de deux câbles 7 de serrage.

La semelle 3 est adaptée pour être solidarisée avec le châssis (non représenté) du véhicule, par des moyens connus en soi. Les deux câbles 7 sont positionnés de part et d'autre des parois 4 de la semelle 3 et du levier 1, traversant des rainures 8 de guidage formées dans la paroi 6. Leurs extrémités 7a sont situées à l'arrière de la semelle 3, au-delà de l'axe 2 d'articulation, et fixées, de manière connue en soi, à un axe transversal 9 de liaison faisant partie du levier 1, cet axe 9 étant prévu à l'extrémité de ce dernier articulée sur l'axe 2.

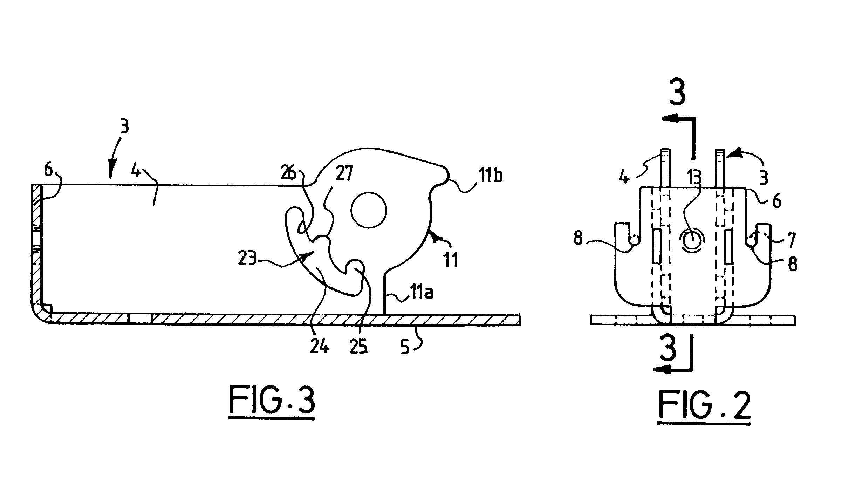

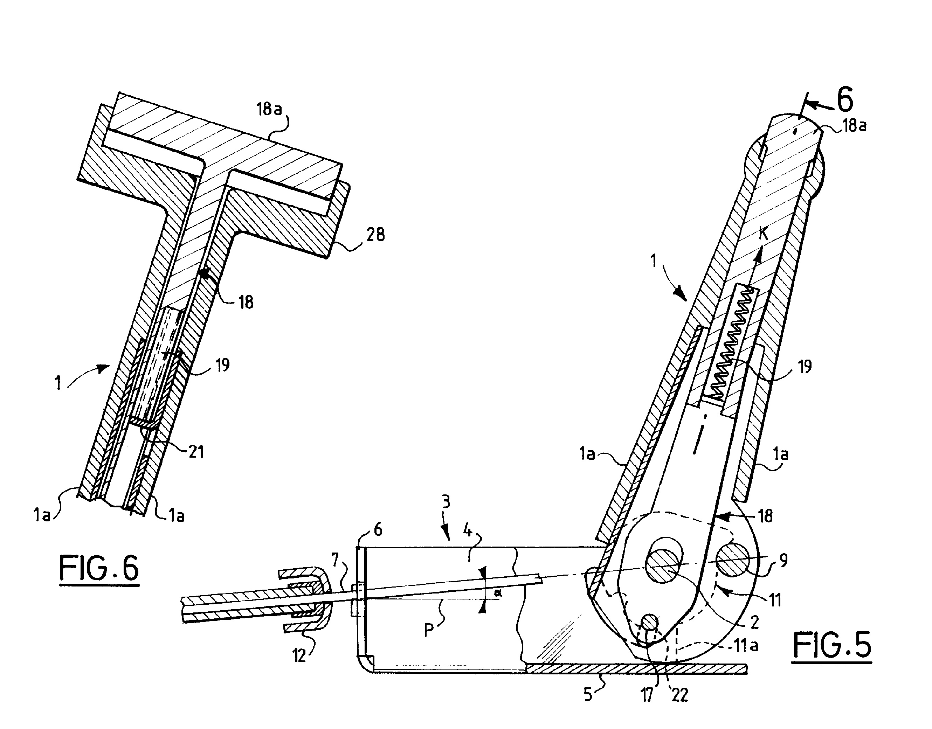

La partie terminale de la semelle 3 contiguë à l'axe d'articulation 2, c'est-à-dire dans l'exemple représenté les extrémités des parois longitudinales 4 opposées à la paroi transversale 6 d'entrée des câbles 7, sont profilées de manière à former une double rampe 11 pouvant assurer la limitation du débattement de l'axe 9 de liaison des câbles 7, durant les manoeuvres du levier 1. Chaque rampe 11 a ainsi un profil sensiblement circulaire dont l'extrémité basse 11 a, contiguë au fond 5 de la semelle 3, définit la position de repos du levier 1 (Fig.1), tandis que son extrémité opposée 11 b (Fig.3) forme une butée de retenue du levier 1 en position relevée de serrage du frein (Fig.5). Ainsi durant les manoeuvres du levier 1, l'axe 9 de liaison des extrémités 7a des câbles 7, se déplace au-dessus des rampes profilées 11 en tendant ou détendant les câbles 7 selon le sens du basculement du levier 1.

Le frein comporte des moyens de réglage de la tension des câbles 7, par exemple dans le mode de réalisation représenté, un palonnier 12 dans lequel sont enfilés les câbles 7 avant de parvenir à l'axe 9, et un système vis 13 - écrou 14. La vis 13 traverse la paroi d'entrée 6 et son extrémité coopère avec le palonnier 12 afin de permettre le réglage en tension des câbles 7. Ces derniers sont logés dans des gaines 16 se terminant dans le palonnier 12, et sur lesquelles ce dernier agit comme une butée de position variable grâce au système vis 13 - écrou 14.

Les moyens de verrouillage du levier 1 en position serrée comprennent un axe 17 fixé à l'extrémité d'un poussoir 18 traversé par l'axe 2, monté coulissant à l'intérieur du levier 1 et soumis à une contrainte de rappel élastique K. A cet effet le poussoir 18 contient un ressort longitudinal 19 qui prend appui par l'une de ses extrémités sur un support 21 lié aux parois du levier 1, et génère ladite contrainte de rappel élastique K suivant la direction longitudinale. D'autre part une came d'appui glissant de l'axe 17 est prévue dans la semelle 3, ainsi que des lumières oblongues 22, agencées dans les parois la du levier 1 pour permettre le guidage et la translation de l'axe 17 durant les manoeuvres du levier. La came précitée est constituée, dans l'exemple de réalisation décrit, par deux profils identiques 23 délimitant chacun l'un des côtés d'une ouverture 24 ménagée dans chaque paroi 4, entre l'axe d'articulation 2 du levier 1 et le fond 5. Chaque profil 23 comporte une extrémité basse formée par une encoche 25 de verrouillage recevant l'axe 17 du poussoir 18 lorsque le levier 1 est en position serrée relevée (Fig.5), une extrémité haute 26 formant butée pour l'axe 17 lorsque le levier 1 est en position de repos (Fig.1), et une encoche ou dégagement 27, ménagé dans la zone médiane de la came 23. Ce dégagement 27 reçoit l'axe de verrouillage 17 dans une position intermédiaire de serrage du levier 1.

Du côté opposé à son axe 2 d'articulation sur la semelle 3, le levier 1 est muni d'une poignée terminale 28 de préhension manuelle, dans laquelle peut coulisser l'extrémité 18a du poussoir 18. Cette extrémité 18a fait légèrement saillie de la poignée 18 lorsque le ressort 19 maintient l'axe de verrouillage 17, grâce à sa force de rappel K, dans l'un de ses deux logements possibles 25 et 27 de la double came 23. Par ailleurs la semelle 3 est fixée au plancher du véhicule de telle sorte que les efforts de serrage et de manoeuvre soient repris par la structure du véhicule.

Chaque butée 11 b de retenue du levier 1 en position de serrage maximum est ménagée de telle sorte que dans cette position (Fig.5), les câbles 7 forment un angle a avec le plan (P) de fixation de la semelle 3 sur le châssis. De ce fait, la direction des efforts dans les câbles 7 passe légèrement au-dessus de l'axe géométrique d'articulation de l'axe 2, ce qui crée sur le levier 1 un couple résultant moteur, qui a pour effet de maintenir un contact permanent entre l'axe 9 et les butées terminales 11 b.

La position de repos du levier 1 est fixée, comme déjà indiqué, par le profil 11 a d'extrémité des rampes 11 formant butée, lorsque l'axe 9 du levier 1 est en contact avec ces profils 11a (Fig.1).

La manoeuvre du frein de parc qui vient d'être décrit s'effectue de la manière suivante.

Le levier 1 étant en position basse de repos (Fig.1), les câbles 7 forment un angle p avec un plan P' parallèle au plan de fixation de la semelle 3 sur le châssis, . La position repos du levier 1 est assurée par le contact de l'axe 9 porte-câbles avec les profils de butée 11a a de la semelle 3. L'axe 17 d'extrémité du poussoir 18 est positionné en butée sur les extrémités 26 des cames 23, l'extrémité 18a du poussoir 18 affleurant la poignée de préhension 28 comme représenté à la Fig.1. L'axe 17 n'est pas engagé dans les lumières 22, et de ce fait maintient le ressort 19 à l'état comprimé.

Lors de la manoeuvre de serrage, le levier 1 entraîne le poussoir 18 en rotation relative par rapport à la semelle 3 autour de l'axe d'articulation 2. Les câbles 7 se débattent angulairement autour d'un point O (Fig.1), situé au niveau de la paroi d'entrée 6 de la semelle 3, de part et d'autre de la commande, de telle sorte que la distance séparant ces câbles de l'axe 2 diminue, tandis que l'axe de liaison 9 tourne autourde l'axe 2. Au début de la manoeuvre de serrage, l'axe 17 du poussoir 18 glisse sur les profils terminaux 26 puis se translate dans les lumières oblongues 22 du levier 1, sous l'effet de l'effort de rappel élastique K du ressort 19, dès que les encoches intermédiaires 27 sont atteintes. Si la manoeuvre du frein est alors interrompue, l'axe 17 immobilise le levier 1 par rapport à la semelle 3, dans cette position angulaire intermédiaire entre la position de repos et la position de serrage maximum, de sorte que les câbles 7 restent maintenus dans un premier état de tension, généralement suffisant dans la plupart des cas.

Si l'utilisateur poursuit sa manoeuvre de relevage du levier 1, l'axe 17 d'extrémité du poussoir 18 glisse sur la seconde partie des cames 23, c'est-à-dire sur la rampe séparant les encoches 27 des dégagements terminaux 25, ce qui provoque la régénération de la contrainte de rappel élastique K. Puis, le basculement du levier 1 se poursuivant, l'axe 17 vient s'engager en fin de course dans les profils constitués par les dégagements 25 des cames 23. La butée fin de course est alors assurée par le contact de l'axe porte-câbles 9 sur les prof ils d'arrêt 11 b de la semelle 3 (Fig.5). Dans la position de serrage maximum, les câbles 7 forment avec le plan P, parallèle au plan de fixation de la semelle 3 sur la caisse, l'angle a comme déjà exposé.

En position intermédiaire, dans laquelle l'axe de verrouillage 17 est maintenu dans les encoches 27, le déverrouillage du frein s'obtient en soulageant le levier 1 avec un effort plus faible que sur les commandes à secteurs dentés et cliquets, en actionnant l'extrémité 18a du poussoir 18 de façon à dégager l'axe 17 des encoches 27 avant de rabattre le levier 1 en position repos. En position de serrage maximum, il suffit d'actionner l'extrémité 18a du poussoir 18 pour dégager l'axe 17 des profils terminaux 25, et de repousser le levier 1 vers sa position de repos sans avoir à soulager d'effort de contact.

Le poussoir 18, soumis à l'effort de rappel K, et coulissant à l'intérieur du levier 1, assure ainsi un premier maintien du frein en position de serrage intermédiaire. En position de serrage maximum, le fait que la direction de l'effort dans les câbles 7 passe légèrement au-dessus de l'axe géométrique de l'axe d'articulation 2, ainsi que la mise en butée de l'axe 9 sur des profils 11 b, assure l'auto-maintien du frein dans cette position, l'axe 17 engagé dans les encoches 25 assurant un verrouillage complémentaire de sécurité. Dans cette position, le déverrouillage s'obtient sans effort autre qu'un effort opposé à la contrainte K sur le poussoir 18, une simple poussée sur la poignée 28 suffisant alors à assurer le desserrage du frein.

Le déplacement de l'axe 17 du poussoir 18 sur les profils de came 23 dans les encoches 25 de la semelle 3, en coopération avec les lumières oblongues 22 par translation dans celles-ci, assure une fonction d'auto-verrouillage de sécurité du frein, permettant d'éviter tout desserrage accidentel.

La gamme de tension disponible dans les câbles 7 peut être préajustée aux valeurs voulues en jouant sur le dimensionnement des pièces constitutives (distance entre l'axe d'articulation 2 et l'axe de liaison 9, angle de débattement du levier 1 admis...).

La position intermédiaire du levier est intéressante pour offrir à l'utilisateur un serrage suffisant dans la plupart des cas d'utilisation, moyennant un faible débattement angulaire de la commande. Le frein selon l'invention ne nécessite pour sa manoeuvre qu'un effort limité de la part de l'utilisateur, inférieur à 18 daN environ, au niveau du levier 1. En effet au fur et à mesure de la montée en tension des câbles 7, la distance séparant ces câbles de l'axe de rotation 2 diminue, grâce au positionnement relatif de l'axe 2, de l'axe de liaison 9 et des extrémités 7a des câbles 7 au-delà de l'axe 2.

L'invention n'est pas limitée à la réalisation décrite et peut comporter diverses variantes d'exécution, la semelle 3 pouvant ainsi être réalisée de manière différente de celle représentée, avec par exemple des profils 23 de cames différents.

Il convient de noter que durant la manoeuvre du levier 1, l'axe 9 tourne sur lui-même. La longueur de cet axe 9 est déterminée de manière à suffire pour le passage et surtout le débattement des câbles 7, de part et d'autre de la semelle 3. Les câbles 7 se translatent dans leurs gaines 16 tout en effectuant un mouvement de rotation autour du point O, qui tend à réduire la distance qui les sépare de l'axe de rotation 2. Le mouvement de translation-rotation des câbles 7 crée un rapport de démultiplication d'effort variable qui diminue considérablement les efforts pour serrer et desserrer le frein.

En variante, la pièce de liaison 9 peut être adaptée pour permettre l'accrochage d'un seul câble à l'arrière de la commande. La liaison entre l'embout du câble et l'axe 9 est alors réalisée au moyen d'une chape en U dont les extrémités viennent s'accrocher sur l'axe 9, traversent les gorges 8 de guidage, et dont la partie centrale porte le système de réglage (vis-écrou par exemple) de la tension du câble. Cette forme d'exécution du frein fonctionne de manière similaire à la précédente et présente les mêmes avantages techniques, la chape en U et l'extrémité du câble effectuant les mêmes mouvements de translation-rotation que les câbles de la réalisation précédente. De plus, en l'absence d'impératif de verrouillage de sécurité dans certains cas d'utilisation, il est possible de réaliser un frein selon l'invention, simplifié par la suppression du poussoir 18, du ressort 19 et de l'axe 17.

## Revendications

1. Frein de parc pour véhicule, du type comprenant un levier (1) articulé sur un axe (2) solidaire d'une semelle (3) adaptée pour être solidarisée avec le châssis du véhicule, relié à au moins un câble (7) de serrage, et des moyens de verrouillage du le- vierdans une position angulaire pré-déterminée, caractérisé en ce que le levier comporte un élément (9) de liaison avec l'extrémité (7a) du câble, et l'extrémité de la semelle (3) contiguë à l'axe d'articulation du levier est profilée de manière à former une rampe (11) de limitation du débattement dudit élément de liaison durant les manoeuvres du levier, cette rampe étant limitée par une butée (11 b) de retenue du levier en position relevée de serrage du frein et étant positionnée à l'extrémité de la semelle opposée à l'entrée du câble, l'axe d'articulation (2) étant situé entre cette entrée et l'élément de liaison précité.

2. Frein selon la revendication 1, comportant deux câbles (7) disposés de chaque côté de la semelle (3) et dont les extrémités (7a) sont fixées à l'élément de liaison transversal (9) précité, au-delà de l'axe (2) d'articulation par rapport à l'entrée des câbles dans la semelle (3) et il est prévu des moyens de réglage de la tension des câbles, tels qu'un palonnier (12) associé à un système vis (13)-écrou (14) monté sur la semelle.

3. Frein selon l'une des revendications 1 et2, caractérisé en ce que lesdits moyens de verrouillage du levier (1) en position serrée comprennent un axe (17) fixé à l'extrémité d'un poussoir (18) monté coulissant à l'intérieur du levier et soumis à une contrainte de rappel élastique (K), une came (23) d'appui de cet axe ménagée dans la semelle (3) et des lumières oblongues (22) agencées dans le levier pour permettre le guidage et la translation de l'axe (17) durant les manoeuvres du levier, les extrémités (26, 25) de la came (23) définissant les positions de repos et serrée du poussoir et la contrainte de rappel élastique (K) du poussoir tendant à maintenir ledit axe de verrouillage appliqué sur la came.

4. Frein selon la revendication 3, caractérisé en ce qu'une encoche (27) est ménagée dans la zone médiane de la came (23) pour permettre d'y loger l'axe de verrouillage (17) dans une position intermédiaire de serrage du levier (1).

5. Frein selon l'une quelconque des revendications 1 à 4, caractérisé en ce que la butée (11 b) de retenue du levier (1) en position de serrage est ménagée de telle sorte que dans cette position, le câble (7) forme un angle (a) avec le plan (P) de fixation de la semelle (3) sur le châssis, et que de ce fait la direction de l'effort dans le câble crée un couple résultant moteur sur le levier.

6. Frein selon l'une quelconque des revendications 3 à 5, caractérisé en ce que le poussoir (18) contient un ressort longitudinal (19) qui prend appui sur un support (21) lié au levier (1) et génère ladite contrainte de rappel élastique (K).
